# EUROPEAN PATENT APPLICATION

(11) **EP 2 680 509 A1**
(43) Date of publication of application: **01.01.2014**
(21) Application number: 13174140.7
(22) Date of filing: 27.06.2013
(51) Int. Cl.: H04L 12/58

(54) **Protocol agnostic dynamic messaging platform and a system and a method thereof**

(30) Priority: 27.06.2012 US 201261665188 P; 06.05.2013 US 201313888230
(71) Applicant: Synchronoss Technologies, Inc., Bridgewater, NJ 08807 (US)
(72) Inventor: Allen, Aristotle B, Breinigsville, PA 18031 (US); Kowalchuck, Dan, Breinigsville, PA 18031 (US); Smyth, Jeffrey, Emmaus, PA 18049 (US); Negandhi, Priyesh, Orefield, PA 18069 (US); Powell, Tony, Macungie, PA 18062 (US)
(74) Representative: Harris, Ian Richard

(57) **Abstract**

Embodiments of the present invention relates to a protocol agnostic dynamic messaging platform. Typically, the platform dynamically creates a message based on a transactional state associated with a first external entity. The platform automatically generates content, determines content format, and chooses a transmission protocol for the message to be sent to a second external entity. The platform is advantageously flexible to allow a message of any content type to be transmitted via any transmission protocol.

## Description

### RELATED APPLICATIONS

This application claims benefit of priority under 35 U.S.C. section 119(e) of the copending United States Provisional Patent Application Serial No. 61/665,188 filed June 27, 2012, entitled "PROTOCOL AGNOSTIC DYNAMIC MESSAGING PLATFORM AND A SYSTEM AND A METHOD THEREOF," which is hereby incorporated by reference in its entirety.

### FIELD OF THE INVENTION

The present invention relates to messaging platforms. More particularly, the present invention relates to a protocol agnostic dynamic messaging platform and a system and a method thereof.

### BACKGROUND OF THE INVENTION

Currently, there is no unified, single solution available for messaging. There are numerous messaging platforms that exists today that employ different solutions to solve the same problem. Any enhancements to a single prior art messaging platform are not available to other prior art messaging platforms. These prior art messaging platforms may also share an overlapping feature set. Resources are wasted in repeatedly solving the same problem.

A prior art messaging platform is typically built around a specific type of content and protocol for content transmission. The prior art messaging platform is inflexible in allowing any content type and/or any protocol to be used and, thus, requires cold patching to be performed to make changes to content or style of message.

In addition, the prior art messaging platform typically has a minimal feature set and lacks features that, for example, enable inspection of transactions within the messaging platform.

The present invention addresses at least these limitations in the prior art.

### SUMMERY OF THE INVENTION

Embodiments of the present invention relates to a protocol agnostic dynamic messaging platform. Typically, the platform dynamically creates a message based on a transactional state associated with a first external entity. The platform automatically generates content, determines content format, and chooses a transmission protocol for the message to the sent to a second external entity. The platform is advantageously flexible to allow a message of any content type to be transmitted via any transmission protocol.

In one aspect, a messaging platform is provided. The messaging platform includes a receiver component, a qualifier component, an assembler component, and a sender component.

The receiver component is typically configured to handle a request from a first external entity. In some embodiments, the request is event driven or state driven.

The qualifier component is typically configured to determine whether the request requires a message to be sent to a second external entity. In some embodiments, the determination made by the qualifier component is based on configuration data. The qualifier component is also typically configured to define a rule for the message. The rule specifies content, an appropriate content format, and an appropriate transmission protocol. In some embodiments, the content is customized for the second external entity. The first external entity can be the same of different from the second external entity.

The assembler component is typically configured to create the message based on the rule. The assembler component is associated with the content format, such plain text, media, HTML, binary type, or any suitable content format.

The sender component is typically configured to affix the transmission protocol for the message and to send the message to the second external entity. The sender component is associated with a transmission protocol, such as SMS, FTP, SCP, SMTP, HTTPS, MMS, HTTP, or any suitable transmission protocol.

In some embodiments, the messaging platform includes a qualifier factory that has at least one qualifier component. The at least one qualifier component includes the qualifier component.

In some embodiments, the messaging platform includes an assembler factory that has at least one assembler component. The at least one assembler component includes the assembler component.

In some embodiments, the messaging platform includes a sender factory that has at least one sender component. The at least one sender component includes the sender component.

In some embodiments, the messaging platform includes a controller configured to select the assembler component and the sender component based on the rule. The controller can be a part of the assembler component.

In some embodiments, the messaging platform includes an auditor component configured to audit all actions within the messaging platform.

In another aspect, a computer program product, for example comprising a non-transitory computer-readable medium, is provided. The computer program product comprises instructions, that when executed by a computing device, cause the computing device to perform a method. The instructions can be stored on a said non-transitory computer readable medium. The method includes receiving a request from a first external entity and qualifying the request received from the first external entity as one of a first type and a second type. In some embodiments, the first type does not require a message to be sent to a second external entity, and the second type requires a message to be sent to the second external entity. In some embodiments, the request is qualified based on a state associated with the request.

The method also includes automatically performing a first procedure in response to the request being qualified as the first type, and automatically performing a second procedure in response to the request being qualified as the second type.

In some embodiments, the first procedure includes returning a response to the first external entity indicating that no messages were sent to a second external entity.

In some embodiments, the second procedure includes creating a message including content, and sending the message to a second external entity. In some embodiments, the second procedure includes, prior to creating a message, defining a rule for the message. In some embodiments, creating a message includes referencing configuration data to determine how to create the message and/or customizing the message tailored to the second external entity. Format of the content can be plain text, media, html, or binary data. In some embodiments, sending the message includes affixing an appropriate transmission protocol. In some embodiments, the second procedure further includes auditing all actions associated with the request, and relaying information regarding the sent message to the first external entity.

In yet another aspect, a system in provided. The system includes a first external entity and a messaging platform communicatively coupled with the first external entity. The messaging platform is typically configured to dynamically create a message based on a transactional state associated with the first external entity.

In some embodiments, the messaging platform is configured to automatically generate content, automatically determine content format, and automatically choose a transmission protocol for the message. In some embodiments, the messaging platform is configured to audit all actions within the messaging platform, and to provide the first external entity information regarding an audit associated with a request made by the first external entity. In some embodiments, the messaging platform includes modular components. The modular components can include a receiver component, a qualifier component, an assembler component, a sender component and an auditor component. More or less components are contemplated.

In some embodiments, the system also includes a second external entity communicatively coupled with the messaging platform. The second external entity is typically configured to receive the message.

In some embodiments, the system also includes a data store communicatively coupled with the messaging platform. The data store is typically configured to store configuration data.

In some embodiments, the system includes administration tools configured to alter the system.

### BRIEF DESCRIPTION OF THE DRAWINGS

Reference will now be made in detail to implementations of the present invention as illustrated in the accompanying drawings. The same reference indicators will be used throughout the drawings and the following detailed description to refer to the same or like parts.
Figure 1 illustrates an example messaging platform in accordance with the present invention.
Figure 2 illustrates an example computing device configured to implement the messaging platform in accordance with the present invention.
Figure 3 illustrates an example system for implementing an embodiment of the present invention.
Figures 4A-4C illustrate an example messaging method in accordance with the present invention.
Figures 5A-5B illustrates example messaging service flows and components in accordance with the present invention.

### DETAILED DESCRIPTION OF THE INVENTION

In the following description, numerous details are set forth for purposes of explanation. However, one of ordinary skill in the art will realize that the invention may be practiced without the use of these specific details. This, the present invention is not intended to be limited to the embodiments shown but is to be accorded the widest scope consistent with the principles and features described herein.

Embodiments of the present invention relates to a protocol agnostic dynamic messaging platform. Typically, the platform dynamically creates a message based on a transactional state associated with a first external entity. The platform automatically generates content, determines content format, and chooses a transmission protocol for the message to be sent to a second external entity. The platform is advantageously flexible to allow a message of any content type to be transmitted via any transmission protocol.

### Messaging Platform

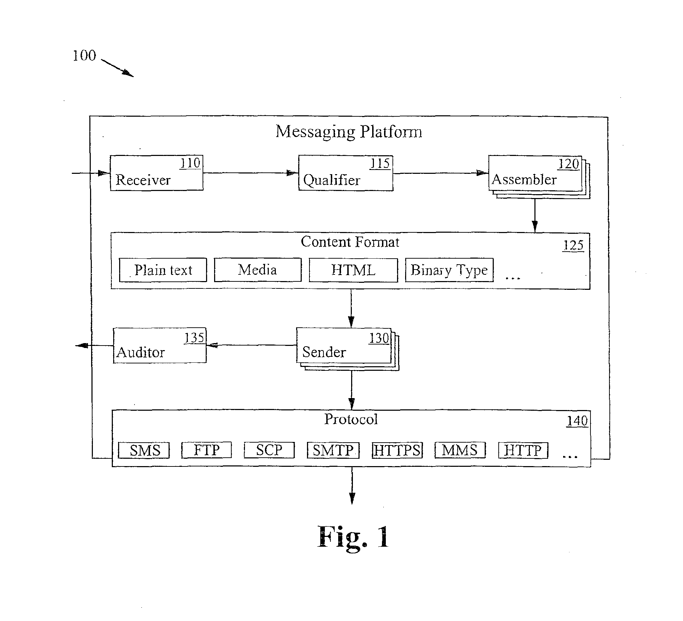

Figure 1 illustrated an example messaging platform 100 in accordance with the present invention. The messaging platform 100 typically includes modular components, such as a receiver component 110, a qualifier component 115, one or more assembler components 120, one or more sender components 130, and an auditor component 135.

The messaging platform 100 can include a plurality of assembler components 120 (referred to as an "assembler factory"). Each assembler component 120 is associated with a different type of content format 125. For example, assume that the messaging platform 100 supports plain text, media, html, and binary type. The messaging platform 100 in such a configuration will include four assembler components 120, one for each type of content format. During messaging, a controller informs the assembler factory to select an appropriate assembler component 120 to use. The controller can be part of or separate from the messaging platform 100. The messaging platform 100 is able to increase its complexity by including additional assembler components to thereby support corresponding content formats.

The messaging platform 100 can also include a plurality of sender components 130 (referred to as a "sender factory"). Each sender component 130 is associated with a different type of transmission protocol 140. For example, assume the messaging platform 100 supports SMS, FTP, SCP, SMTP, HTTPS, MMS and HTTP. The messaging platform 100 in such a configuration will include seven sender components 230, one for each type of transmission protocol. Similarly, during messaging, the controller informs the sender factory to select an appropriate sender component 130 to use. The messaging platform 100 is able to increase its complexity by including additional sender components to thereby support corresponding transmission protocols.

More or less components are possible depending on system requirements. For example, the messaging platform 100 can include a plurality of qualifier components 115 (referred to as a "qualifier factory").

The receiver component 110 typically handles an incoming request. The qualifier component 115 typically determines whether the request requires a message to be sent to an external entity and, if so, defines a rule for the message. The rule specifies content, an appropriate content format, and an appropriate transmission protocol. Based on the rule, the controller selects the appropriate assembler component 120 and the appropriate sender component 130. Also based on the rule, the selected assembler component 120 creates the message, and the selected sender component 130 affixed the transmission protocol for the message and sends the message to the external entity. The auditor component 135 typically audits all actions within the messaging platform 100. In some embodiments, the controller is a part the assembler component or assembler factory. Although these components have been briefly explained, they are discussed in detail below.

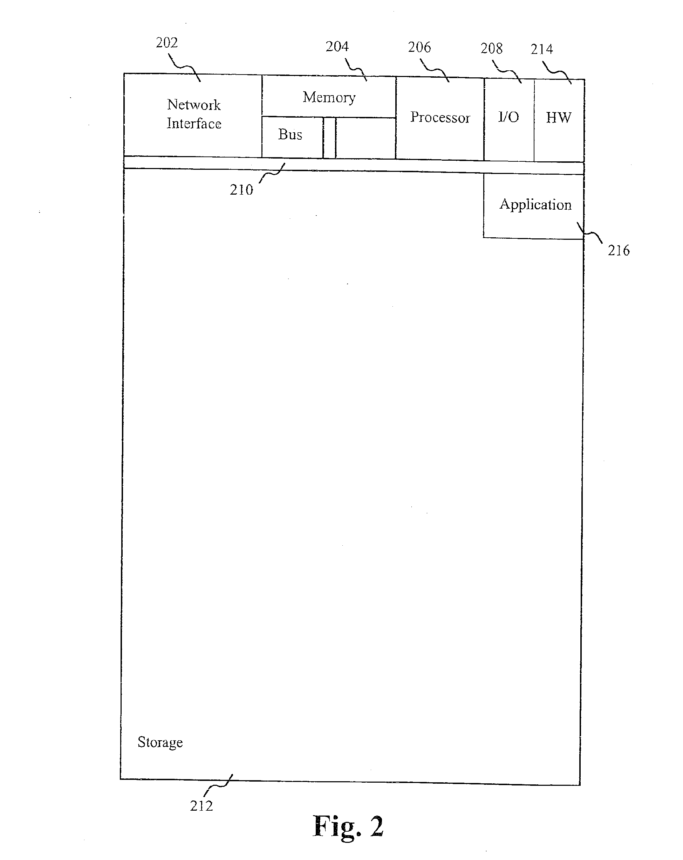

Figure 2 illustrates an example computing device 200 configured to implement the messaging platform in accordance with the present invention. The computing device 200 is able to be used to acquire, cache, store, compute, search, transfer, communicate and/or display information. The computing device 200 is able to automatically and dynamically generate content, determine content format, and choose a transmission protocol. The computing device 200 can be a server, a desktop computer, a laptop computer, a mobile device, or any processing device accessible by one or more external entities.

In general, a hardware structure suitable for implementing the computing device 200 includes a network interface 202, a memory 204, a processor 206, I/O device(s) 208, a bus 210 and a storage device 212. The choice of processor is not critical as long as a suitable processor with sufficient speed is chosen. The memory 204 is able to be any conventional computer memory known in the art. The storage device 212 is able to include a hard drive, CDROM, CDRW, DVD, DVDRW, flash memory card, RAM, ROM, EPROM, EEPROM or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, display, printer, modem, touchscreen, button interface and other devices. Application(s) 216 used to implement an embodiment of the messaging platform are likely to be stored in the storage device 212 and memory 204 and are processed by the processor 206. More or less components shown in Figure 2 are able to be included in the computing device 200. In some embodiments, hardware 220 for the messaging platform is included. Although the computing device 200 in Figure 2 includes applications 216 and hardware 214 for the messaging platform, the messaging platform is able to be implemented on a computing device in hardware, firmware, software or any combination thereof.

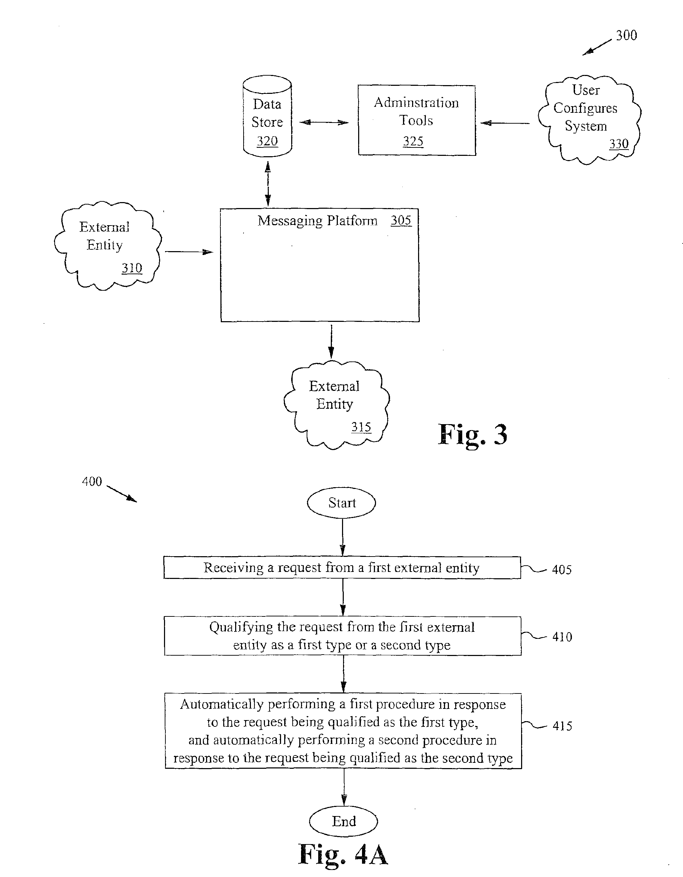

Figure 3 illustrates an example system 300 for implementing an embodiment of the present invention. The system 300 includes messaging platform 305, a first external entity 310, and a second external entity 315. The first external entity 310 can be the same of different from the second external entity 315. The system 300 also includes a datastore 320 configured to store data such as configuration data, and administration tools 325 configured to make changes the system 300. For example, a user 330 is able to use the administration tools 325 to make changes to the configuration data. As illustrated in Figure 3, the messaging platform 305, the first external entity 310, the second external entity 315, the datastore 320, and the administration tools 325 are communicatively coupled with one another, either directly or indirectly via a network. The messaging platform 305 can be similarly configured as the messaging platform 100 discussed above.

The first external entity 310 typically sends or triggers a request, such as a notification, that there has been a change at the first external entity 310. In some embodiments, the first external entity 310 is an outside device. The request can be event driven or state driven, and is received by the messaging platform 305. Based on characteristics (e.g., transactional state) of the request, the messaging platform 305 determines whether or not to notify the second external entity 315 with a message. In some embodiments, the second external entity 315 is a customer. The second external entity 315 is typically configured to receive messages from the messaging platform 305. If it is determined that the second external entity 315 needs to be notified, then the messaging platform 305 dynamically creates the message based on the transactional state associated with the first external entity 310. Typically, the messaging platform 305 is configured to automatically generate content, automatically determine content format type, and automatically choose a transmission protocol for the message to be sent to the second external entity 315. Typically, in doing so, the messaging platform 305 references the configuration data stored in the datastore 320. In some embodiments, the messaging platform 305 is configured to audit all actions within the messaging platform 305, and to provide the first external entity 310 information regarding an audit associated with the request made by the first external entity 310.

At a higher level perspective, Figures 4A-4C illustrate an example messaging method 400 in accordance with the present invention. The method 400 is performed on a computing device such as the computing device 200. First, referring to Figure 4A, the method 400 starts at a step 405, where the computing device receives a request from a first external entity. The first external entity can be an outside device. Typically, the request is sent upon an event or state change associated or at the first external entity.

At a step 410, the computing device qualifies the request received from the first external entity as a first type or as a second type. In some embodiments, the request is qualified based on the state associated with the request. In some embodiments, the first type does not require a message to be sent to a second external entity, and the second type requires a message to be sent to the second external entity. The second external entity can be a customer or any party related to the first external entity.

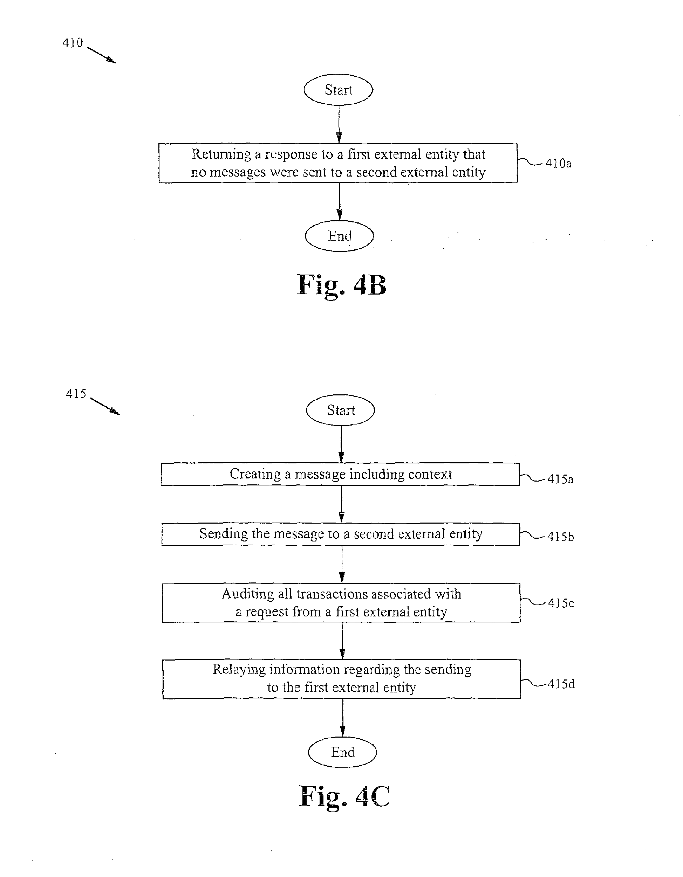

At a step 415, the computing device automatically performs a first procedure in response to the request being qualified at the first type, and automatically preforms a second procedure in response to the request being qualified as the second type. The first procedure and the second procedure are discussed in Figures 4B and 4C, respectively. After the step 415, the method 400 ends.

Figure 4B illustrated an example first procedure 410 in accordance with the present invention. The first procedure 410 is typically performed in response to the request being qualified at the first type in Figure 4A. The procedure 410 begins at a step 410a, wherein the computing device returns a response to the first external entity indicating that no messages were or need to be sent to the second external entity. Even though there has been a change at the first external entity, the second external entity does not need to be notified of updated of this change. After the step 410a, the procedure 410 ends.

Figure 4C illustrates an example second procedure 415 in accordance with the present invention. The second procedure 415 is typically performed in response to the request being qualified as the second type in Figure 4A. The procedure 415 begins at a step 415a, wherein the computing device created a message including content. In some embodiments, the second procedure includes, prior to creating a message, defining a rule for the message, which specifies content, content format and/transmission protocol. In some embodiments, creating a message includes referencing configuration data to further determine how to create the message and/or customize the message tailored to the second external entity. Format of the content can be, for example, plain text, media, html, or binary data. At a step 415b, the computing device sends the message to the second external entity. In some embodiments, sending the message includes affixing an appropriate transmission protocol, which can be SMS, FTP, SCP, SMTP, HTTPS, MMS, or HTTP, to name a few. At a step 415c, the computing device audits all actions associated with the request from the first external entity. At a step 415d, the computing device relays information regarding the sent message to the first external entity. It should be noted that the step 415d can be preformed prior to or concurrently with the step 415b. after the step 415d, the procedure 415 ends.

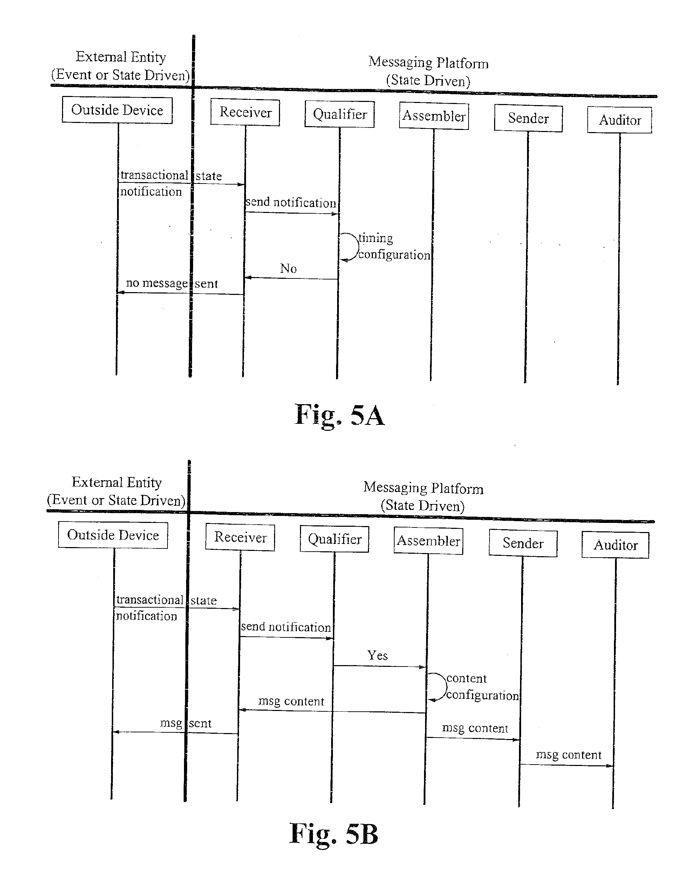

At a lower level perspective, Figures 5A-5B illustrates example messaging service flows and components in accordance with the present invention. Particularly, Figure 5A illustrates an example message service flow corresponding to the first procedure 410 of Figures 4A-4B; and, Figure 5Bb illustrates an example service flow corresponding to the second procedure 415 of Figures 4A and 4C. In Figures 5A-5B, the (first) external entity includes an outside device, and the messaging platform includes modular components a receiver component, a qualifier component, and assembler component, a sender component, and an auditor component.

First, referring to Figure 5A. The outside device triggers a notification, which is received at the receiver component. In some embodiments, the notification is sent in response to an event or state change associated with the outside device. The receiver component receives the notification and passes the notification to the qualifier component. The qualifier component qualifies the notification as whether or not a message needs to be sent to a second external entity. In some embodiments, the qualification is based on state of the notification, configuration data or configuration data. Assuming no messages need to be sent, the receiver sends a response back to the outside device. The response typically indicates that no messages need to be sent to the second external entity.

Now, referring to Figure 5B. If the qualifier component qualifies the notification from the outside device as requiring a message to be sent, then the qualifier component also establishes or defines a rule for the message. Based on the rule, the appropriate assembler component and the appropriate sender component are selected by a controller. The appropriate assembler component, based on the transactional state associated with the notification and the rule, creates the message. The content can be customized specifically for the second external device by referring to configuration data and other relevant information. In some embodiments, the assembler component is configured to extract tokens and/or blurbs. Tokens refer to specific data. The assembler component, for each token, takes static data and dynamically applies the data in the message in a place of the token. Unlike tokens, blurbs contain logic. The assembler component, for each blurb, decides whether data will be applied in the message in place of the blurb and, if so, dynamically applies the data in the message in place of the blurb. A blurb essentially includes an additional later of decision making.

After the message is created, the assembler passes the message to the appropriate sender component and the receiver component. The sender component adheres the transmission protocol and sends the message to the second external device. The sender component also sends the message to the auditor component for auditing and management purposes (e.g. tracking and reporting). The auditor component typically tracked what has been done locally with the messaging platform. The receiver component sends a response back to the outside device. The response typically indicates that the message is or will be sent, if not already, to the second external entity, along with the content therein. The outside device can retain and use that information for its own purposes.

The complexity of the messaging platform can be extended by sending the message to more than one external entities. The complexity of the messaging platform can also be extended by including additional assembler components and/or sender components. It should be noted that each assembler component does not necessarily correspond to a sender component. For example, a message containing plain text, thus created by an assembler component associated with plain text, can be sent using a variety of transmission protocols, such as SMS or HTTP. The messaging platform of the present invention provides for many different customer experience, such as plain text over FTP, or HTML over SMTP, or plain text over SMS, to name a few.

Embodiments of the messaging platform of the present invention provide a single, unified solution for messaging. This solution is capable of handling a high number of transactions and is capable of handling communications to clients for multiple distinct channels. In some embodiments, this messaging platform in employed to support varying schedules.

The messaging platform of the present invention is configurable in real time and easily leverageable by additional programs. The messaging platform allows for ongoing changes and updates to content and/or style of communication. Changes to content and/style of communication are typically quick and easy. For example, the messaging platform typically implements a self service model with built in change management and access control. Multiple parties are able to manage changes to content simultaneously and securely. Content are modified in real time via administration tools. Message format is determined based on any number of transactional states. Further, rules for specific attributes such as product type, order stats, credit class, customer locale, etc., allow for highly targeted content based on a wide variety of transaction metrics. For another example, a transmission protocol is determined at run time. The abstracted multi-tier delivery service allows for multiple delivery methods to be used.

A communication management workflow of the messaging platform allows for versioning control and auditing of changes. The messaging platform allows for auditing and retrieval of sent messages. The messaging platform also provides for robust tracking and reporting. For example, the messaging platform is able to track failed deliveries. The messaging platform typically has a complete audit trail that provides high quality performance metrics and analysis.

A messaging platform can be rapidly depleted for dynamic content and branding. Business entities, such as legal, marketing and back offices, are able to realize reduced time to market and a lower maintenance cost for customer facing content and system interactions.

Aspects of the subject matter described herein are set out in the following numbered clauses.
1. A messaging platform comprising:
   a. a receiver component configured to handle a request from a first external entity;
   b. a qualifier component is configured to determine whether the request requires a message to be sent to a second external entity and to define a rule for the message, wherein the rule specifies content, an appropriate content format, and an appropriate transmission protocol;
   c. an assembler component is configured to create the message based on the rule;
      and
   d. a sender component is configured to affix the transmission protocol for the message and to send the message to the second external entity.
2. The messaging platform of clause 1, wherein the request is one of event driven and state driven.
3. The messaging platform of clause 1 or clause 2, wherein the first external entity is the second external entity.
4. The messaging platform of any one of the preceding clauses, wherein the content is customized for the second external entity.
5. The messaging platform of any one of the preceding clauses, wherein the assembler component is associated with the content format.
6. The messaging platform of any one of the preceding clauses, wherein the content format is plain text, media, HTML, or binary type.
7. The messaging platform of any one of the preceding clauses, wherein the sender component is associated with the transmission protocol.
8. The messaging platform of any one of the preceding clauses, wherein the transmission protocol is SMS, FTP, SCP, SMTP, HTTPS, MMS, or HTTP.
9. The messaging platform of any one of the preceding clauses, wherein the determination made by the qualifier component is based on configuration data.
10. The messaging platform of any one of the preceding clauses, further comprising a qualifier factory including at least one qualifier component, wherein at least one qualifier component includes the qualifier component.
11. The messaging platform of any one of the preceding clauses, further comprising an assembler factory including at least one assembler component, wherein the at least one assembler component includes the assembler component.
12. The messaging platform of any one of the preceding clauses, further comprising a sender factory including at least one sender component, wherein the at least one sender component includes the sender component.
13. The messaging platform of any one of the preceding clauses, further comprising a controller configured to select the assembler component and the sender component based on the rule.
14. The messaging platform of clause 13, wherein the controller is a part of the assembler component.
15. The messaging platform of any one of the preceding clauses, further comprising an auditor component configured to audit all actions within the messaging platform.
16. A program product comprising instructions that, when executed by a computing device, cause the computing device to preform a method comprising:
   a. receiving a request from a first external entity;
   b. qualifying the request received from the first external entity as one of a first type and a second type; and
   c. automatically performing a first procedure in response to the request being qualified as the first type, and automatically performing a second procedure in response to the request being qualified as the second type.
17. The program product of clause 16, wherein the first type does not required a message to be sent to a second external entity, and the second type does require a message to be sent to the second external entity.
18. The program product of clause 16 or clause 17, wherein the request is qualified based on a state associated with the request.
19. The program product of any one of clauses 16 to 18, wherein the first procedure includes returning a response to the first external entity indicating that no messages were sent to a second external entity.
20. The program product of any one of clauses 16 to 19, wherein the second procedure includes:
   a. creating a message including content; and
   b. sending the message to a second external entity.
21. The program product of clause 20, wherein the second procedure includes, prior to creating a message, defining a rule for the message.
22. The program product of clause 20 or 21, wherein creating a message includes referencing configuration data to determine how to create the message.
23. The program product of any one of clauses 20 to 22, wherein creating a message includes customizing the message tailored to a second external entity.
24. The program product of any one of clauses 20 to 23, wherein format of the content is plain text, media, html, or binary data.
25. The program product of any one of clauses 20 to 24, wherein sending the message includes affixing an appropriate transmission protocol.
26. The program product of any one of clauses 20 to 25, wherein the second procedure further includes auditing all actions associated with the request.
27. The program product of clause 26, wherein the second procedure further includes relaying information regarding the sent message to the first external entity.
28. A system comprising:
   a. a first external entity; and
   b. a messaging platform communicatively coupled with the first external entity, wherein the messaging platform is configured to dynamically create a message based on a transactional state associated with the first external entity.
29. The system of clause 28, wherein the messaging platform is configured to automatically generate content, automatically determine content format, and automatically choose a transmission protocol for the message.
30. The system of clause 28 or 29, wherein the messaging platform is configured to audit all actions within the messaging platform, and to provide the first external entity information regarding an audit associated with a request made by the first external entity.
31. The system of any one of clauses 28 to 30, wherein the messaging platform includes modular components, wherein the modular components includes a receiver component, a qualifier component, an assembler component, a sender component and an auditor component.
32. The system of any one of clauses 28 to 31, further comprising a second external entity communicatively coupled with the messaging platform, wherein the second external entity is configured to receive the message.
33. The system of any one of clauses 28 to 32, further comprising a data store communicatively coupled with the messaging platform, wherein the data store is configured to store configuration data.
34. The system of any one of clauses 28 to 33, further comprising administration tools configured to alter the system.
35. The program product of any one of clauses 16 to 27 comprising a non-transitory
   computer readable medium storing the instructions.
While the invention has been described with reference to numerous specific details, one of ordinary skill in the art will recognize that the invention can be embodied in other specific forms without departing from the spirit of the invention. This, one of ordinary skill in the art will understand that the invention is not to be limited by the foregoing illustrative details, but rather is to be defined by the appended claims.

## Claims

1. A messaging platform comprising:
a. a receiver component configured to handle a request from a first external entity;
b. a qualifier component is configured to determine whether the request requires a message to be sent to a second external entity and to define a rule for the message, wherein the rule specifies content, an appropriate content format, and an appropriate transmission protocol;
c. an assembler component is configured to create the message based on the rule;
and
d. a sender component configured to affix the transmission protocol for the message and to send the message to the second external entity.

2. The messaging platform of Claim 1, wherein the request is one of event driven and state driven, and wherein the content is customized for the second external entity.

3. The messaging platform of Claim 1 or Claim 2, wherein the assembler component is associated with the content format, and the sender component is associated with the transmission protocol.

4. The messaging platform of any one of the preceding claims, wherein the determination made by the qualifier component is based on configuration data.

5. The messaging platform of any one of the preceding claims, further comprising at least one of:
a. a qualifier factory including at lease one qualifier component, wherein the at least one qualifier component includes the qualifier component;
b. an assembler factory including at least one assembler component, wherein the at least one assembler component includes the assembler component;
c. a sender factory including at least one sender component, wherein the at least one sender component includes the sender component;
d. a controller configured to select the assembler component and the sender component based on the rule;
e. an auditor component configured to audit all actions within the messaging platform.

6. The messaging platform of Claim 5, wherein the controller is a part of the assembler component.

7. A program product comprising instructions that, when executed by a computing device, cause the computing device to preform a method comprising:
a. receiving a request from a first external entity;
b. qualifying the request received from the first external entity as one of a first type and a second type; and
c. automatically preforming a first procedure in response to the request being qualified as the first type, and automatically performing a second procedure in response to the request being qualified as the second type.

8. The program product of Claim 7, wherein the first type does not require a message to be sent to a second external entity, and the second type does require a message to be sent to the second external entity.

9. The program product of Claim 7 or Claim 8, wherein the request is qualified based on a state associated with the request.

10. The program product of any one of Claims 7 to 9, wherein the first procedure includes returning a response to the first external entity indicating that no messages were sent to a second external entity, and wherein the second procedure includes:
a. defining a rule for a message;
b. creating the message including content based on configuration data;
c. affixing an appropriate transmission protocol to the message; and
d. sending the message to a second external entity.

11. The program product of Claim 10, wherein the second procedure further includes auditing all actions associated with the request and relaying information regarding the sent message to the first external entity.

12. A system comprising:
a. a first external entity; and
b. a messaging platform commutatively coupled with the first external entity,
wherein the messaging platform is configured to dynamically create a message based on a transactional state associated with the first external entity.

13. The system of Claim 12, wherein the messaging platform is configured to:
a. automatically generate content, automatically determine content format, and automatically choose a transmission protocol for the message; and
b. audit all actions within the messaging platform, and to provide the first external entity information regarding an audit associated with a request made by the first external entity.

14. They system of Claim 12 or Claim 13, wherein the messaging platform includes modular components, wherein the modular components includes a receiver component, a qualifier component, an assembler component, a sender component and an auditor component.

15. The system of any one of claims 12 to 14, further comprising:
a. a second external entity communicatively coupled with the messaging platform, wherein the second external entity is configured to receive the message;
b. a data store communicatively coupled with the messaging platform, wherein the data store is configured to store configuration data; and
c. administration tools configured to alter the system.
